# EUROPÄISCHE PATENTSCHRIFT

(11) **EP 0 490 086 B1**
(45) Veröffentlichungstag und Bekanntmachung des Hinweises auf die Patenterteilung: **18.01.1995**
(21) Anmeldenummer: 91119100.5
(22) Anmeldetag: 09.11.1991
(51) Int. Cl.: F16B 7/04, F16B 7/18, F16B 12/32

(54) **Schraubverbindung für mindestens zwei lösbar miteinander zu verbindende Teile, insbesondere mit Längsnuten versehene Profilstäbe**
Threaded joint for at least two parts to be connected releasable to each other in particular profile bars provided with longitudinal slots
Raccord à vis pour assembler au moins deux pièces de manière détachable, notamment des barres profilées pourvues de rainures longitudinales

(30) Priorität: 13.12.1990 DE 4039806
(43) Veröffentlichungstag der Anmeldung: 17.06.1992
(73) Patentinhaber: Rixen, Wolfgang, Dipl.-Ing., 42699 Solingen (DE); Pies, Gerrit, 42699 Solingen (DE)
(72) Erfinder: Rixen, Wolfgang, Dipl.-Ing., D-42699 Solingen (DE); Pies, Gerrit, D-42699 Solingen (DE); Schuster, Harald, Dipl.-Ing., D-42659 Solingen (DE)
(74) Vertreter: Eichler, Peter, Dipl.-Ing.

(56) Entgegenhaltungen:
- DE-A- 3 328 142
- DE-A- 3 438 773
- DE-A- 3 829 306
- DE-U- 8 908 669

## Beschreibung

Die Erfindung betrifft eine Schraubverbindung mit mindestens zwei lösbar miteinander zu verbindenden Teilen, insbesondere in ihren Außenflächen hinterschnittene Längsnuten aufweisenden Profilstäben, mit einer Verbindungsschraube, die mit ihrem Gewindeschaft durch eine im ersten Verbindungsteil vorhandene Durchstecköffnung hindurchzustecken sowie in eine im zweiten Verbindungsteil vorhandene Innengewindebohrung einzudrehen ist und mit ihrem über den Gewindeschaft vorspringenden Kopf hinter den am ersten Verbindungsteil vorhandenen Rand der Durchstecköffnung greift.

Schraubverbindungen obiger Art sind allgemein bekannt, wobei im einfachsten Falle eine auf das Schraubenende aufgedrehte Schraubenmutter das die entsprechende Innengewindebohrung aufweisende zweite Verbindungsteil bildet. Gattungsgemäß beschaffene Schraubverbindungen sind auch speziell zum Verbinden von mit hinterschnittenen Längsnuten versehenen Profilstäben bekannt, z.B. durch die DE-A-33 28 142, wo die Verbindungsschraube mit ihrem Kopf in die hinterschnittene Längsnut des einen Profilstabes eingeschoben und mit ihrem Schraubgewindeschaft in den mit entsprechendem Innengewinde versehenen hohlen Zentralstab des anderen Profilstabes eingedreht ist. Zum Betätigen der Verbindungsschraube, jedenfalls zu deren festem Anziehen muß hier im Zentralstab des ihren Kopf aufnehmenden Profilstabes an entsprechender Stelle eine besondere Zugangsbohrung für das am Verbindungsschraubenkopf anzusetzende Schraubendreherwerkzeug vorgesehen werden. Das ist zeit- und arbeitsaufwendig. Bei einer anderen, durch die DE-A-34 38 773 bekannten gattungsmäßigen Schraubverbindung ist die Verbindungsschraube in einen Nutenstein eingedreht und an ihrem Kopfende von einem mit einer entsprechenden Durchstecköffnung versehenen Widerlagerbolzen umgeben, wobei sie zum Verbinden zweier rechtwinklig zueinander verlaufender Profilstäbe mit ihrem Nutenstein in die Längsnut des einen Profilstabes und mit ihrem Widerlagerbolzen in eine entsprechend groß bemessene Querbohrung des anderen Profilstabes eingeschoben wird. Auch hier erfordert die Anbringung der Bohrung für den Widerlagerbolzen in dem einen Profilstab einen zusätzlichen Arbeitsaufwand und zugleich eine entsprechende Materialschwächung. Allen bekannten Schraubverbindungen haftet darüber hinaus der Nachteil an, daß sie nur an solchen Verbinderstellen eingesetzt werden können, wo ihr Betätigungskopf hinreichend zugänglich für das Schraubendreherwerkzeug ist. Dadurch wird die Anwendungs- bzw. Einsatzweise dieser Schraubverbindungen entsprechend eingeengt.

Aus DE-U-89 08 669 ist eine Schraubverbindung mit den eingangs genannten Merkmalen bekannt. Das zweite Verbindungsteil ist ein Profilstab, an dessen Stirnseite das erste Verbindungsteil mit der Verbindungsschraube durch deren Schraubeingriff in die Innengewindebohrung des zweiten Verbindungsteils befestigt wird. Das erste Verbindungsteil hat beidseitig der Verbindungsschraube angeordnete, aus dem ersten Verbindungsteil vertikal vorspringende T-förmige Kupplungsstücke, die in hinterschnittene Längsnuten eines zweiten Profilstabs eingreifen. Die Befestigung jedes T-förmigen Kupplungsstück mit dem ersten Verbindungsteil erfolgt durch Klemmschrauben, die seitlich von außerhalb der Profilstäbe einzuschrauben sind. Bei der bekannten Schraubverbindung ist der Betätigungskopf der Verbindungsschraube nicht mehr zugänglich, wenn der zweite Profilstab angeschlossen ist. Dieser Anschluß des zweiten Profilstabs kann auch nicht direkt mit dem ersten Verbindungsteil erfolgen, sondern es sind weitere Kupplungsteile erforderlich, die nach dem Festsetzen des ersten Verbindungsteils am zweiten Verbindungsteil mit der Verbindungsschraube jeweils durch ein besonderes Verbindungsmittel befestigt werden müssen.

Der Erfindung liegt daher die Aufgabe zugrunde, eine Schraubverbindung der eingangs erwähnten Gattung dahingehend zu verbessern und zu vervollkommnen, daß sie auch an solchen Stellen eingesetzt werden kann, wo ihr Betätigungskopf nur sehr begrenzt oder überhaupt nicht mehr zugänglich für eine herkömmliche Schraubendreher-Werkzeugbetätigung ist und wobei an den miteinander zu verschraubenden Teilen, insbesondere Profilstäben, möglichst keinerlei zusätzliche Anpassungsarbeiten, wie z.B. Bohrungen oder Schlitzungen vorgenommen zu werden brauchen.

Die vorerwähnte Aufgabe wird erfindungsgemäß durch eine Schraubverbindung gelöst, bei der das erste, also die Durchstecköffnung für die Spannschraube enthaltende Verbindungsteil als Spannkörper ausgebildet ist, auf dem eine quer zur Verbindungsschraube angeordnete Spannschraube und eine dadurch zu verstellende, keilförmig unter den Kopf der Verbindungsschraube greifende Spannbacke gelagert sind. Vorteilhaft besitzt der Spannkörper ein im wesentlichen U-förmiges Seitenprofil, nämlich einen die Durchstecköffnung für die Verbindungsschraube enthaltenden sowie die verstellbare Spannbacke aufliegend tragenden Verbindungssteg und zwei darüber miteinander verbundene, aufragende Endteile, von denen eines als mit einer entsprechenden Innengewindebohrung für die Spannschraube versehene Lagerwange und das andere als feste Gegenspannbacke für den zwischen ihr und der verstellbaren Spannbacke liegenden Senkkopf der Verbindungsschraube ausgebildet ist. Dabei umgreifen die verstellbare Spannbacke und die auf dem Spannkörper fest angeordnete Gegenspannbacke die zwischen ihnen liegende Verbindungsschraube zweckmäßigerweise auch seitlich teilweise, wobei sie an ihren einander zugewandten Enden oberseitig mit der konischen Unterseite des Verbindungsschrauben-Senkkopfes entsprechenden, etwa halbtrichterförmigen Keilflächen versehen sind.

Mit den vorerwähnten Mitteln nach der Erfindung kommt man zu einer Schraubverbindung, die auch in all den Fällen vorteilhaft zu verwenden ist, wo der Kopf der Verbindungsschraube vergleichsweise unzugänglich für das Ansetzen eines herkömmlichen Schraubendreherwerkzeuges ist und jedenfalls das feste Anziehen der Verbindungsschraube durch die quer zu ihr verlaufende und in vielen Fällen sehr viel besser zugängliche Spannschraube und die durch sie zu betätigenden Spannbacken erfolgen kann. Auf diese Weise können insbesondere mit einem Zentralstab und dazu parallel laufenden hinterschnittenen Längsnuten versehene Profilstäbe sowohl rechtwinklig als auch flach aufeinanderliegend miteinander verbunden werden, ohne daß an den Profilstäben irgendwelche zusätzlichen Anpassungsarbeiten vorgenommen zu werden brauchen. So kann beispielsweise für rechtwinklig miteinander zu verbindende Profilstäbe die Verbindungsschraube mit ihrem Gewindeschaft unmittelbar in den mit einer entsprechenden Innengewindebohrung versehenen Zentralstab des einen Profilstabes eingedreht werden, während für die Schraubverbindung von flach aufeinanderliegend miteinander zu verbindenden Profilstäben ein in eine hinterschnittene Längsnut des einen Profilstabes einzuschiebender, das zweite Verbindungsteil bildender Nutenstein mit entsprechender Innengewindebohrung für die darin einzudrehende Verbindungsschraube verwendet wird.

In Anpassung an die miteinander zu verbindenden Profilstäbe und deren hinterschnittene Längsnuten besitzt der Spannkörper mitsamt seinen Spannbacken und seiner Lagerwange vorteilhaft ein entsprechendes schwalbenschwanzförmiges Stirnprofil, wobei der insbesondere mit einem Innensechskant versehene Betätigungskopf der Spannschraube innerhalb dieses Stirnprofils liegt. Ein so beschaffener Spannkörper kann mitsamt der in ihm bereits steckenden Verbindungsschraube ohne weiteres in die Längsnut und deren Außenschlitz eines Profilstabes eingeschoben werden. Dabei ist die Verbindungsschraube wenn auch zunächst nur locker bereits entweder unmittelbar in den anderen Profilstab oder mit dem in dessen Längsnut einzuschiebenden Nutenstein verschraubt. Sodann können nach Erreichen der gewünschten Verschiebe- bzw. Befestigungsstelle durch Betätigen der Spannschraube die Verbindungsschraube fest angezogen und damit auch die beiden Profilstäbe fest miteinander verbunden werden.

In der Zeichnung sind mehrere Ausführungsbeispiele erfindungsgemäß beschaffener Schraubverbindungen dargestellt. Dabei zeigen
- Fig.1: die explosionsartige, vergrößerte Darstellung einer für die rechtwinklige Verbindung zweier Profilstäbe geeigneten Schraubverbindung,
- Fig.2: die Montage zweier rechtwinklig miteinander zu verbindender Profilstäbe in der Seitenansicht,
- Fig.3: die zu Fig.2 gehörige Schnittansicht in der endgültigen Befestigungsposition der beiden Profilstäbe,
- Fig.4: die vergrößerte Draufsicht auf das Stirnende eines Profilstabes mit darauf aufgeschraubtem Spannkörper,
- Fig.5: die Unteransicht des Spannkörpers mit darin stekkender, geschnitten dargestellter Verbindungsschraube,
- Fig.6: eine speziell für die Verbindung flach aufeinanderliegender Profilstäbe geeignete Schraubverbindung in vergrößerter Darstellung,
- Fig.7 und 8: die Montage bzw. die Verbindung zweier flach aufeinanderliegender Profilstäbe mittels der in Fig.6 dargestellten Schraubverbindung jeweils in geschnittener Darstellung, und
- Fig.9: eine dritte Ausführungsform der Schraubverbindung für zwei senkrecht miteinander zu verbindende Hohlprofile im Schnitt.

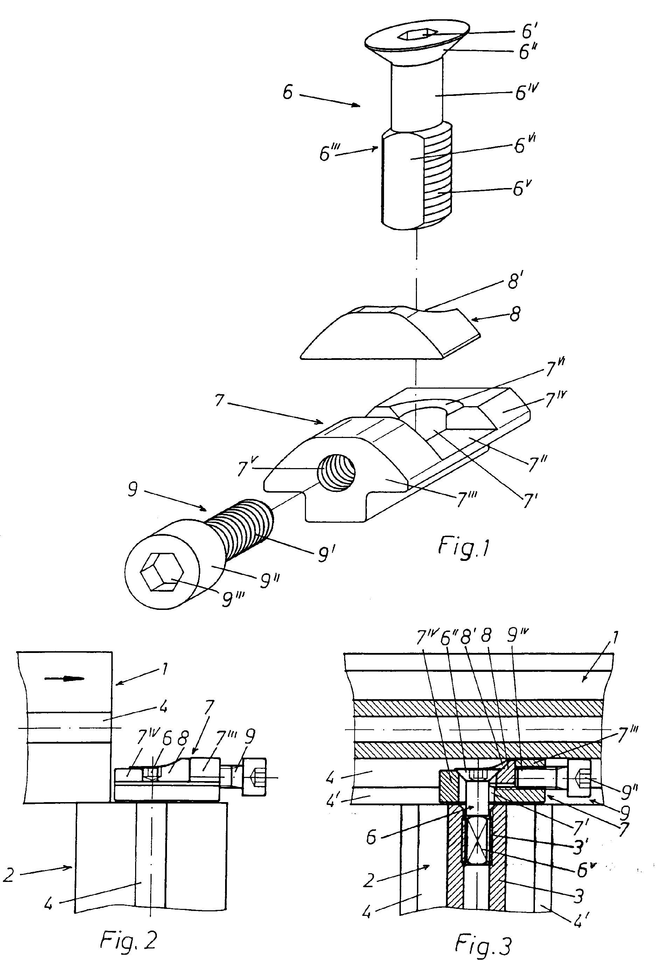

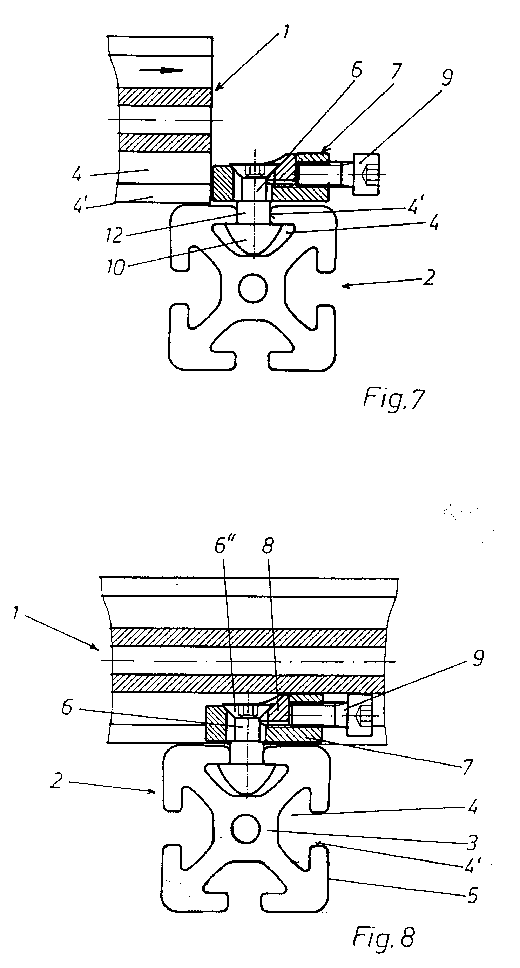

Die in den Fig.1 bis 5 dargestellte Schraubverbindung ist zum lösbaren Verbinden der beiden senkrecht zueinander verlaufenden Leichtmetall-Profilstäbe 1,2 bestimmt, die im einzelnen das insbesondere den Fig.7 und 8 entnehmbare Profil besitzen, nämlich einen hohl ausgebildeten Zentralstab 3 sowie mit hinterschnittenen Längsnuten 4 versehene Außenflächen 5. Die zu den Längsnuten 4 führenden Außenschlitze sind mit 4′ bezeichnet.

Die zur Verbindung der beiden Profilstäbe 1,2 im Sinne der Fig.2 und 3 dienende Schraubverbindung besteht im wesentlichen aus der Verbindungsschraube 6, dem Spannkörper 7 mit der verstellbaren Spannbacke 8 und der Spannschraube 9. Die Verbindungsschraube 6 besitzt einen mit einer Sechskantöffnung 6′ versehenen Senkkopf 6˝. Der Schraubenschaft 6‴ ist in seinem dem Senkkopf 6˝ zugewandten Bereich 6^{IV} glattzylindrisch ausgebildet und im Durchmesser kleiner als der Gewindebereich 6^{V}. Letzterer ist beidseitig mit Abflachungen 6^{VI} versehen, die bündig in den glattzylindrischen Bereich 6^{IV} übergehen.

Der Spannkörper 7 besitzt ein im wesentlichen U-förmiges Seitenprofil, nämlich einen eine Durchstecköffnung 7′ für die Verbindungsschraube 6 enthaltenden sowie die verstellbare Spannbacke 8 aufliegend tragenden Verbindungssteg 7˝ und zwei darüber miteinander verbundene, aufragende Endteile 7‴,7^{IV}, von denen das Endteil 7‴ als mit einer entsprechenden Innengewindebohrung 7^{V} für die Spannschraube 9 versehene Lagerwange ausgebildet ist, während das Endteil 7^{IV} als feste Gegenspannbacke für den zwischen ihr und der verstellbaren Spannbacke 8 liegenden Senkkopf 6˝ der Verbindungsschraube 6 dient. Die Spannschraube 9 ist mit einem entsprechenden Außengewinde 9′, vorzugsweise M6, und mit einem Betätigungskopf 9˝ versehen, in dem sich die Sechskant-Betätigungsöffnung 9‴ befindet. Der Spannkörper 7 besitzt mitsamt seinen Spannbacken 7^{IV} und 8 und seiner Lagerwange 7‴ ein schwalbenschwanzförmiges Stirnprofil, wobei der Betätigungskopf 9˝ der Spannschraube innerhalb dieses Stirnprofils liegt. Die Spannbacken 7^{IV} und 8 sind an ihren einander zugewandten Enden oberseitig mit der konischen Unterseite des Senkkopfes 6˝ der Verbindungsschraube 6 entsprechenden, etwa halbtrichterförmigen Keilflächen 7^{VI} bzw. 8′ versehen, wobei die Keilfläche 8′ weniger stark geneigt als die Keilfläche 7^{VI} verläuft.

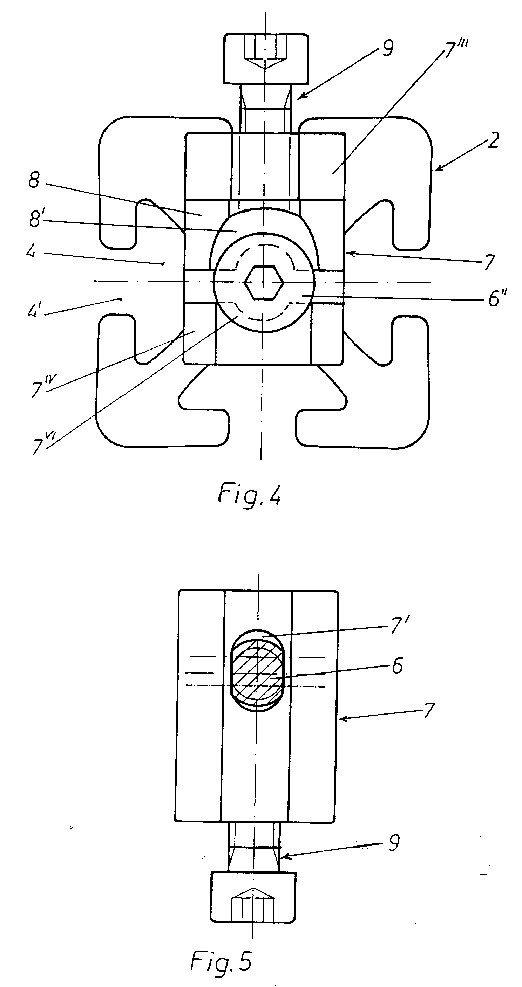

Die im Spannkörper 7 vorhandene Durchstecköffnung 7′ für die Verbindungsschraube 6 ist als in Längsrichtung des Spannkörpers 7 verlaufendes Langloch ausgebildet, wie das insbesondere Fig.5 erkennen läßt. Dadurch ist ein entsprechendes Bewegungsspiel zwischen der Verbindungsschraube 6 und dem Spannkörper 7 bzw. dessen Klemmbacken gewährleistet. Obwohl die Verbindungsschraube 6 in ihrem Gewindeteil 6^{V} einen grösseren Durchmesser besitzt als die Breite der Durchstecköffnung 7′ beträgt, nämlich vorzugsweise ein M8-Gewinde aufweist, kann die Schraube 6 wegen der beidseitig an ihr vorhandenen Abflachung 6^{VI} ohne weiteres durch die Durchstecköffnung 7′ im Spannkörper 7 hindurchgesteckt werden. Dadurch kann das Durchsteckloch 7′ vergleichsweise schmal gehalten werden, wodurch eine all zu starke Schwächung des Spannkörpers 7 in diesem Bereich vermieden wird.

Um die beiden Profilstäbe 1,2 in der aus Fig.3 ersichtlichen Weise rechtwinklig miteinander zu verbinden, wird zunächst der Spannkörper 7 mittels der durch seinen Schlitz 7′ hindurchgesteckten Verbindungsschraube 6 stirnseitig auf dem Profilstab 2 locker sitzend verschraubt, also durch Eindrehen des Schraubgewindeteils 6^{V} in das im Zentralstab 3 vorhandene Innengewinde 3′. Die Spannschraube 9 ragt dabei mit ihrem Gewindeende 9^{IV} noch nicht aus der Lagerwange 7‴ heraus, so daß die verstellbare Spannbacke 8 an der Lagerwange 7‴ anzuliegen vermag. In diesem locker verschraubten Zustand des Spannkörpers 7 wird sodann der Profilstab 1 in der aus Fig.2 ersichtlichen Weise mit seiner unten gelegenen Längsnut 4 und deren Außenschlitz 4′ über den Spannkörper 7 soweit geschoben, bis er beispielsweise in die in Fig.3 dargestellte endgültige Befestigungsposition gelangt. Sodann wird durch Anziehen der Spannschraube 9 die Spannbacke 8 verstellt, die dabei mit ihrer halbtrichterförmigen Keilfläche 8′ unter den Verbindungsschrauben-Senkkopf 6˝ greift, der dadurch zugleich gegen die an der festen Spannbacke 7^{IV} vorhandene Keilfläche 7^{VI} gepreßt wird. Auf diese Weise wird die Schraubverbindung fest angezogen, wodurch letztlich über den Spannkörper 7 der Profilstab 1 fest gegen die Stirnseite des Profilstabs 2 gepreßt wird. Wie Fig.3 zeigt, ist das vorerwähnte feste Anziehen der Spannschraube 9 im Gegensatz zur Verbindungsschraube 6 in der endgültigen Befestigungsposition der Profilstäbe 1,2 ohne weiteres möglich, da der Sechskantkopf 9˝ der Spannschraube 9 seitlich ohne weiteres für den Betätigungsschlüssel zugänglich ist.

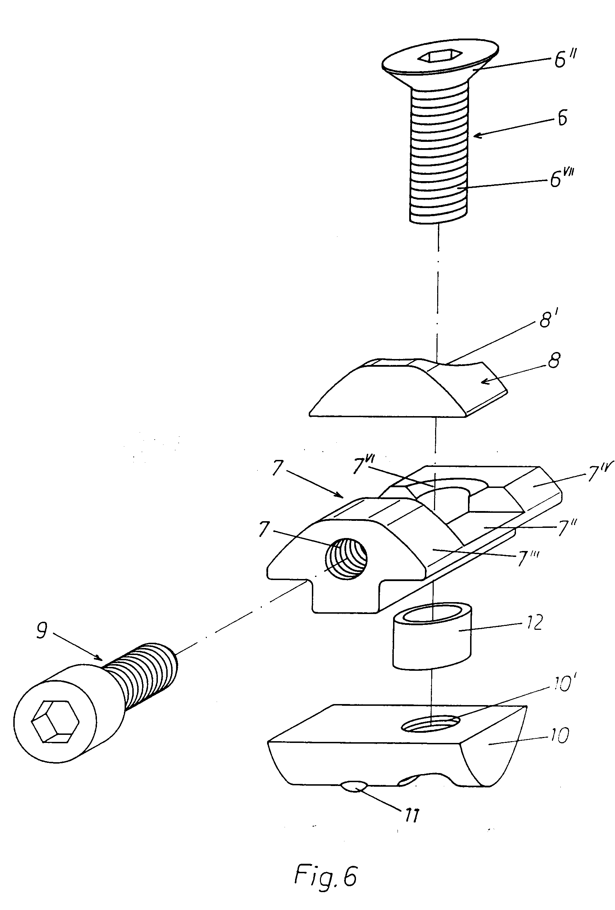

Die in Fig.6 dargestellte Schraubverbindung ist insbesondere für die Verbindung flachliegend aufeinander zu befestigender Profilstäbe geeignet, wie das die Fig.7 und 8 zeigen. Diese Schraubverbindung unterscheidet sich von der in Fig.1 dargestellten im wesentlichen nur dadurch, daß hier die Verbindungsschraube 6 nicht unmittelbar in einem Profilstab-Innengewinde sondern in einem zusätzlichen Nutenstein 10 verschraubt wird, der dazu mit einer entsprechenden Innengewindebohrung 10′ versehen ist. Der Nutenstein 10 ist mit einer leicht vorspringenden federnden Kugelrast 11 versehen, die seinen Verschiebewiderstand in der hinterschnittenen Längsnut 4 eines Profilstabes, z.B. 2, zu vergrößern vermag. Zwischen dem Nutenstein 10 und dem Spannkörper 7 ist hier weiterhin noch eine den Verbindungsschraubenschaft 6^{VII} der durch den Spannkörper 7 hindurchgesteckten Schraube 6 umgebende Distanzbüchse 12 aus federnd nachgiebigem Werkstoff, insbesondere Kunststoff vorgesehen.

Um die in Fig.8 dargestellte Profilstab-Verbindung herzustellen, wird zunächst der Spannkörper 7 mit der in ihm sitzenden Verbindungsschraube 6 und dem auf letztere aufgeschraubten Nutenstein 10 gemäß Fig.7 auf dem Profilstab 2 in vergleichsweise lockerer Form positioniert, wobei der Nutenstein 10 in der Längsnut 4 und die Distanzhülse 12 in deren Außenschlitz 4′ liegen. Die Verbindungsschraube 6 ist dabei nur soweit angezogen, daß der Spannkörper 7 durch die flexible Distanzhülse 12 noch in geringem Abstand oberhalb des Profilstabes 2 zu liegen kommt, mithin noch entsprechend leicht verschiebbar aber dennoch mit leichter Haftreibung um die Verbindungsschraube 6 bzw. deren z.B. mit M6-Gewinde versehenem Schaft 6^{VII} verdreht werden kann. In dieser in Fig.7 dargestellten Montageposition des Spannkörpers 7 auf dem Profilstab 2 kann der damit flach aufeinanderliegend zu verbindende andere Profilstab 1 sodann wie früher schon beschrieben mit seiner Längsnut 4 und deren Außenschlitz 4′ über den Spannkörper in die in Fig.8 dargestellte Position geschoben werden, in der dann durch Betätigen der Spannschraube 9 und entsprechendes Verstellen der unter den Senkkopf 6˝ keilförmig greifenden Spannbacke 8 die Verbindungsschraube angezogen und damit der Profilstab 1 mit dem Profilstab 2 fest verbunden wird.

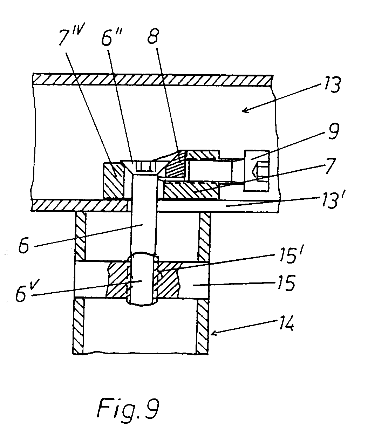

Bei dem in Fig.9 dargestellten Ausführungsbeispiel werden zwei rechtwinklig zueinander verlaufende Hohlprofilstäbe 13,14 durch die neuartige Schraubverbindung fest miteinander verbunden. Die hier vorhandene Schraubverbindung entspricht grundsätzlich der in Fig.1 dargestellten, indem sie wiederum aus einem mit einer Spannschraube 9 sowie einer dadurch zu verstellenden Spannbacke 8 und einer festen Gegenspannbacke 7^{IV} versehenen Spannkörper 7 und einer durch dessen Schlitz 7′ hindurchgesteckten Verbindungs-Senkkopfschraube 6 besteht. Letztere ist aber mit ihrem Gewindeschaft 6^{V} in die Innengewindebohrung 15′ eines endseitig in dem Hohlprofilstab 14 angeordneten Widerlagerbolzens 15 eingedreht. Damit der andere Hohlprofilstab 13 über den Spannkörper 7 bzw. die Verbindungsschraube 6 seitlich geschoben werden kann, ist im Hohlkörper 13 ein entsprechender Längsschlitz 13′ vorgesehen. Dieser kann durchgehend bis zum zugehörigen Stirnende des Hohlprofils 13 verlaufen oder aber bei teilweise breiterer Schlitzung auch nur soweit reichen, daß dadurch der Spannkörper 7 in das Innere des Hohlprofils 13 eingesteckt und letzteres sodann in die in Fig.9 dargestellte Befestigungsposition seitlich verschoben werden kann. Auch in diesem Falle wird die Verbindungsschraube durch herkömmliches Betätigen ihres Senkkopfes 6˝ zunächst nur vergleichsweise lose in den Widerlagerbolzen 15 eingeschraubt, um sodann in der endgültigen Befestigungsposition durch die Spannschraube 9 und die dadurch zu verstellende Spannbacke 8 fest angezogen zu werden, so daß die beiden Hohlprofile 13,14 fest aufeinander sitzen. Es versteht sich, daß diese Schraubverbindung speziell auch für solche Hohlprofile verwendet werden kann, die wie z.B. C-Schienen mit durchgängigen Längsschlitzen 13′ versehen sind. Trotz ihrer in der endgültigen Befestigungsposition unzugänglichen Lage ihres Senkkopfes 6˝ können die Verbindungsschrauben 6 auch hier über die seitlich angeordnete Spannschraube 9 einwandfrei festgezogen werden.

## Patentansprüche

1. Schraubverbindung mit mindestens zwei lösbar miteinander zu verbindenden Teilen (7,2), insbesondere in ihren Außenflächen (5) hinterschnittene Längsnuten (4) aufweisenden Profilstäben (1,2), mit einer Verbindungsschraube (6), die mit ihrem Gewindeschaft durch eine im ersten Verbindungsteil (7) vorhandene Durchstecköffnung (7′) hindurchzustekken sowie in eine im zweiten Verbindungsteil (2) vorhandene Innengewindebohrung (3′) einzudrehen ist und mit ihrem über den Gewindeschaft vorspringenden Kopf (6) hinter den am ersten Verbindungsteil (7) vorhandenen Rand der Durchstecköffnung (7′) greift, **dadurch gekennzeichnet**, daß das erste Verbindungsteil als Spannkörper (7) ausgebildet ist, auf dem eine quer zur Verbindungsschraube (6) angeordnete Spannschraube (9) und eine dadurch zu verstellende, keilförmig unter den Kopf (6˝) der Verbindungsschraube (6) greifende Spannbacke (8) gelagert sind.

2. Schraubverbindung nach Anspruch 1, **dadurch gekennzeichnet**, daß der Spannkörper (7) ein im wesentlichen U-förmiges Seitenprofil besitzt, nämlich einen die Durchstecköffnung (7′) für die Verbindungsschraube (6) enthaltenden sowie die verstellbare Spannbacke (8) aufliegend tragenden Verbindungssteg (7˝) und zwei darüber miteinander verbundene, aufragende Endteile (7‴,7^{IV}), von denen eines als mit einer entsprechenden Innengewindebohrung (7^{V}) für die Spannschraube (9) versehene Lagerwange (7‴) und das andere als feste Gegenspannbacke (7^{IV}) für den zwischen ihr und der verstellbaren Spannbacke (8) liegenden Senkkopf (6˝) der Verbindungsschraube (6) ausgebildet ist.

3. Schraubverbindung nach Anspruch 2, **dadurch gekennzeichnet**, daß die verstellbare Spannbacke (8) und die auf dem Spannkörper (7) fest angeordnete Gegenspannbacke (7^{IV}) die zwischen ihnen liegende Verbindungsschraube (6) auch seitlich teilweise umgreifen und an ihren einander zugewandten Enden oberseitig mit der konischen Unterseite des Verbindungsschrauben-Senkkopfes (6˝) entsprechenden, etwa halbtrichterförmigen Keilflächen (8′ bzw. 7^{VI} ) versehen sind.

4. Schraubverbindung nach einem der Ansprüche 1 bis 3, **da****durch gekennzeichnet**, daß der Spannkörper (7) mitsamt seinen Spannbacken (7^{IV},8) und seiner Lagerwange (7‴) ein schwalbenschwanzförmiges Stirnprofil besitzt und der insbesondere mit einem Innensechskant (9‴) versehene Betätigungskopf (9˝) der Spannschraube (9) innerhalb dieses Stirnprofils liegt.

5. Schraubverbindung nach einem der Ansprüche 1 bis 4, **da****durch gekennzeichnet**, daß die Durchstecköffnung (7′) für die Verbindungsschraube (6) als in Längsrichtung des Spannkörpers (7) verlaufendes Langloch ausgebildet ist.

6. Schraubverbindung nach Anspruch 5, **dadurch gekenn****zeichnet**, daß der Schaft (6‴) der Verbindungsschraube (6) in seinem dem Senkkopf (6˝) zugewandt liegenden Bereich (6^{IV}) glattzylindrisch ausgebildet und im Durchmesser kleiner als der anschließende Gewindebereich (6^{V}) ist, der beidseitig mit bündig in den glattzylindrischen Schaftbereich (6^{IV}) übergehenden Abflachungen (6^{VI}) versehen ist.

7. Schraubverbindung nach einem der Ansprüche 1 bis 6 für rechtwinklig miteinander zu verbindende Profilstäbe mit hohlem Zentralstab, **dadurch gekennzeichnet**, daß die Verbindungsschraube (6) mit ihrem Gewindeschaft (6^{V}) unmittelbar in den mit einer entsprechenden Innengewindebohrung (3′) versehenen Zentralstab (3) des hier das zweite Verbindungsteil bildenden Profilstabes (2.) einzudrehen ist (Fig.1 bis 5).

8. Schraubverbindung nach einem der Ansprüche 1 bis 6, für flach aufeinanderliegend miteinander zu verbindende Profilstäbe mit hinterschnittenen Längsnuten, **dadurch ge****kennzeichnet**, daß ein in eine hinterschnittene Längsnut (4) des Profilstabes (2) einzuschiebender, das zweite Verbindungsteil bildender Nutenstein (10) mit entsprechender Innengewindebohrung (10′) für die darin einzudrehende Verbindungsschraube (6) vorgesehen ist (Fig.6 bis 8).

9. Schraubverbindung nach Anspruch 8, **dadurch gekenn****zeichnet**, daß zwischen dem Nutenstein (10) und der Unterseite des Spannkörpers (7) eine den Verbindungsschraubenschaft (6^{VII}) umgebende Distanzbüchse (12) aus federnd nachgiebigem Werkstoff, insbesondere Kunststoff vorgesehen ist (Fig.6).

10. Schraubverbindung nach Anspruch 8, **dadurch gekenn****zeichnet**, daß im Nutenstein (10) eine seinen Verschiebewiderstand in der hinterschnittenen Längsnut (4) des Profilstabes (2) vergrössernde Kugelrast (11) vorgesehen ist.

11. Schraubverbindung nach einem der Ansprüche 1 bis 6 für rechtwinklig miteinander zu verbindende Hohlprofilstäbe, **dadurch gekennzeichnet**, daß die Verbindungsschraube (6) mit ihrem Gewindeschaft (6^{V}) in die Innengewindebohrung (15′) eines endseitig in dem einen Hohlprofilstab (14) angeordneten Widerlagerbolzens (15) eingedreht ist und der andere Hohlprofilstab (13) mit einem in seiner zugewandten Wandung liegenden Längsschlitz (13′) quer über die Verbindungsschraube (6) und unter den ihren Senkkopf (6˝) umgreifenden Spannkörper (7) zu schieben ist (Fig.9).

## Claims

1. Screw connection having at least two detachable parts (7,2), which are to be connected to each other, in particular profiled rods (1, 2) comprising undercut in their outer surfaces (5) longitudinal grooves (4), having a connecting screw (6), the threaded shank of which extends through an orifice (7′) provided in the first connection part (7) and is screwed into an internal threaded bore (3′) provided in the second connection part (2) and which connecting screw engages with its head (6) protruding beyond the threaded shank behind the edge of the orifice (7′) provided in the first connection part (7), characterised in that the first connection part is in the form of a clamping member (7), on which are supported a tightening screw (9) arranged transverse to the connecting screw (6) and a clamping jaw (8) which is adjusted by means of the tightening screw (9) and engages in a wedge-shape under the head (6˝) of the connecting screw (6).

2. Screw connection according to claim 1, characterised in that the clamping member (7) comprises a substantially U-shaped lateral profile, namely a connecting bar (7˝), in which is provided the orifice (7′) for the connecting screw (6) and which connecting bar supports lying thereon the adjustable clamping jaw (8), and two interconnected end parts (7‴, 7^{iv}), which protrude beyond the connecting bar (7˝), one end part being a bearing member (7‴) provided with a corresponding internal threaded bore (7^{V}) for the tightening screw (9) and the other end part being a fixed counter clamping jaw (7^{iv}) for the countersunk head (6˝) of the connecting screw (6), which countersunk head lies between the fixed counter clamping jaw (7^{IV}) and the adjustable clamping jaw (8).

3. Screw connection according to claim 2, characterised in that the adjustable clamping jaw (8) and the counter clamping jaw (7^{IV}) fixedly disposed on the clamping member (7) also laterally partially engage the connecting screw (6) lying between them and at their mutually facing ends are provided on the upperside with approximately half-funnel shaped wedge surfaces (8′ and 7^{VI}) which correspond with the conical lowerside of the connecting screw countersunk head (6˝).

4. Screw connection according to any one of claims 1 to 3, characterised in that the clamping member (7) together with its clamping jaw (7^{IV}, 8) and its bearing member (7‴) comprise a dovetailed end profile and the actuating head (9˝) of the tightening screw (9) provided in particular with a hexagon socket (9‴) lies within this end profile.

5. Screw connection according to any one of claims 1 to 4, characterised in that the orifice (7′) for the connecting screw (6) is an oblong hole extending in the longitudinal direction of the clamping member (7).

6. Screw connection according to claim 5, characterised in that the shank (6‴) of the connecting screw (6) is cylindrically smooth in its region (6^{IV}) facing the countersunk head (6˝) and the diameter of the said connecting screw is smaller than the attached threaded region (6^{v}), which is provided on both sides with flattened areas (6^{VI}), which change flush into the cylindrically smooth shank region (6^{IV}).

7. Screw connection according to any one of claims 1 to 6 for profiled rods having a hollow central rod, which rods are to be connected to each other at a right angle, characterised in that the connecting screw (6) is to be screwed with its threaded shank (6^{V}) directly into the central rod (3), provided with a corresponding internal threaded bore (3′), of the profiled rod (2) forming here the second connection part. (Fig. 1 to 5).

8. Screw connection according to any one of claims 1 to 6, for profiled rods having undercut longitudinal grooves, which profiled rods lie flat on top of each other and are to be connected to each other, characterised in that a groove block (10) forming the second connection part is provided with a corresponding internal threaded bore (10′) to enable the connecting screw (6) to rotate therein. (Fig. 6 to 8).

9. Screw connection according to claim 8, characterised in that between the groove block (10) and the lowerside of the clamping member (7) is provided a distance bush (12) which surrounds the connecting screw shank ( 6^{VII}) and which distance bush is made from a resilient yielding material, in particular synthetic materials. (Fig. 6).

10. Screw connection according to claim 8, characterised in that in the groove block (10) is provided a ball catch (11) which increases its ability to resist being displaced in the undercut longitudinal groove (4) of the profiled rod (2).

11. Screw connection according to any one of claims 1 to 6 for hollow profiled rods which are to be connected to each other at a right angle, characterised in that the connecting screw (6) is screwed with its threaded shank (6^{V}) into the internal threaded bore (15′) of a counter bearing pin (15) arranged at one end in one hollow profiled rod (14) and the other hollow profiled rod (13) having a longitudinal slot (13′) lying in its facing wall is displaced transverse over the connecting screw (6) and under the clamping member (7) engaging the countersunk head (6˝) of the connecting screw (6). (Fig. 9).

## Revendications

1. Assemblage par vis comprenant au moins deux pièces (7, 2) à relier entre elles de façon détachable, en particulier des barres profilées (1, 2) présentant dans leurs surfaces extérieures (5) des rainures longitudinales contre-dépouillées (4), et une vis d'assemblage (6) qui doit être introduite, avec sa tige filetée, dans une ouverture de passage (7′) ménagée dans la première pièce d'assemblage (7), qui doit être vissée dans un perçage fileté intérieur (3′) prévu dans la seconde pièce d'assemblage (2), et qui vient en prise, avec sa tête (6) dépassant de la tige filetée, derrière le bord de l'ouverture de passage (7′) prévu au niveau de la première pièce d'assemblage (7), caractérisé en ce que la première pièce d'assemblage est conçue comme un organe de serrage (7) sur lequel sont montées une vis de serrage (9) disposée transversalement par rapport à la vis d'assemblage (6), et une mâchoire de serrage (8) à régler à l'aide de ladite vis (9) et venant en prise à la manière d'un coin sous la tête (6˝) de la vis d'assemblage (6).

2. Assemblage par vis selon la revendication 1, caractérisé en ce que l'organe de serrage (7) présente un profil latéral essentiellement en U, avec une branche d'assemblage (7˝) qui contient l'ouverture de passage (7′) pour la vis d'assemblage (6) et porte à l'horizontale la mâchoire de serrage réglable (8), et deux parties d'extrémité saillantes (7‴, 7^{IV}) reliées entre elles par ladite branche d'assemblage (7˝), dont l'une est conçue comme une face d'appui (7‴) pourvue d'un perçage fileté intérieur (7^{V}) correspondant pour la vis de serrage (9), tandis que l'autre est conçue comme une mâchoire de serrage antagoniste fixe (7^{IV}) pour la tête conique (6˝) de la vis d'assemblage (6), située entre elle et la mâchoire de serrage réglable (8).

3. Assemblage par vis selon la revendication 2, caractérisé en ce que la mâchoire de serrage réglable (8) et la mâchoire de serrage antagoniste (7^{IV}) disposée fermement sur l'organe de serrage (7) entourent aussi latéralement, en partie, la vis d'assemblage (6) située entre elles et sont pourvues, à leurs extrémités tournées l'une vers l'autre, sur la face supérieure, de surfaces cunéiformes (8′ et 7^{VI}) à peu près en forme de demi-entonnoirs qui correspondent au côté inférieur conique de la tête conique de vis d'assemblage (6˝).

4. Assemblage par vis selon l'une des revendications 1 à 3, caractérisé en ce que l'organe de serrage (7) présente, avec ses mâchoires de serrage ( 7^{IV}, 8) et sa face d'appui (7‴), un profil frontal en queue d'aronde, et la tête d'actionnement (9˝) de la vis de serrage (9), pourvue en particulier d'un six pans creux (9‴), se trouve à l'intérieur de ce profil frontal.

5. Assemblage par vis selon l'une des revendications 1 à 4, caractérisé en ce que l'ouverture de passage (7′) pour la vis d'assemblage (6) est conçue comme un trou oblong s'étendant dans le sens longitudinal de l'organe de serrage (7).

6. Assemblage par vis selon la revendication 5, caractérisé en ce que la tige (6‴) de la vis d'assemblage (6) a une forme cylindrique lisse dans sa zone (6^{IV}) tournée vers la tête conique (6˝) et un diamètre inférieur à celui de la zone filetée suivante (6^{V}) qui est pourvue, des deux côtés, de parties aplaties (6^{VI}) se prolongeant dans le même plan par la zone de tige (6^{IV}) cylindrique lisse.

7. Assemblage par vis selon l'une des revendications 1 à 6 pour des barres profilées à relier entre elles à angle droit, avec une barre centrale creuse, caractérisé en ce que la vis d'assemblage (6) doit être vissée directement, avec sa tige filetée (6^{V}), dans la barre centrale (3), pourvue d'un perçage fileté intérieur (3′) correspondant, de la barre profilée (2) constituant ici la seconde pièce d'assemblage (figures 1 à 5).

8. Assemblage par vis selon l'une des revendications 1 à 6 pour des barres profilées à rainures longitudinales contre-dépouillées, à relier à plat l'une sur l'autre, caractérisé en ce qu'un coulisseau (10) à introduire dans une rainure longitudinale contre-dépouillée (4) de la barre profilée (2) et constituant la seconde pièce d'assemblage est pourvu d'un perçage fileté intérieur (10′) correspondant pour la vis d'assemblage (6) à visser dans ledit coulisseau (figures 6 à 8).

9. Assemblage par vis selon la revendication 8, caractérisé en ce qu'il est prévu, entre le coulisseau (10) et le côté inférieur de l'organe de serrage (7), une douille d'écartement (12) en matériau élastique, notamment en matière plastique, qui entoure la tige de vis d'assemblage (6^{VII}) (figure 6).

10. Assemblage par vis selon la revendication 8, caractérisé en ce qu'il est prévu, dans le coulisseau (10), un cran d'arrêt sphérique (11) qui augmente sa résistance au déplacement dans la rainure longitudinale contre-dépouillée (4) de la barre profilée (2).

11. Assemblage par vis selon l'une des revendications 1 à 6 pour des barres profilées creuses à relier entre elles à angle droit, caractérisé en ce que la vis d'assemblage (6) est vissée, avec sa tige filetée (6^{V}), dans le perçage fileté intérieur (15′) d'un boulon de contrebutée (15) disposé côté extrémité dans la barre profilée creuse (14), tandis que l'autre barre profilée creuse (13) doit être enfilée transversalement, à l'aide d'une fente longitudinale (13′) située dans sa paroi tournée vers la barre (14), sur la vis d'assemblage (6) et sous l'organe de serrage (7) entourant la tête conique (6˝) de celle-ci (figure 9).
